# NEUE EUROPÄISCHE PATENTSCHRIFT

(11) **EP 2 855 223 B2**
(45) Veröffentlichungstag und Bekanntmachung des Hinweises auf die Entscheidung über den Einspruch: **08.01.2020**
(45) Hinweis auf die Patenterteilung: 06.04.2016
(21) Anmeldenummer: 13724598.1
(22) Anmeldetag: 24.05.2013
(51) Int. Cl.: B60T 13/66, B60T 17/22

(54) **VERFAHREN ZUR STEUERUNG EINER DRUCKLUFTBREMSEINRICHTUNG EINES SCHIENENFAHRZEUGS IM FALLE EINER ZWANGS-, SCHNELL- ODER NOTBREMSUNG**
METHOD FOR CONTROLLING A COMPRESSED-AIR BRAKING DEVICE OF A RAIL VEHICLE IN THE CASE OF AUTOMATIC, QUICK, OR EMERGENCY BRAKING
PROCÉDÉ DE COMMANDE D'UN SYSTÈME DE FREINAGE PNEUMATIQUE D'UN VÉHICULE FERROVIAIRE EN CAS DE FREINAGE AUTOMATIQUE, RAPIDE OU D'URGENCE

(30) Priorität: 25.05.2012 DE 102012010519
(43) Veröffentlichungstag der Anmeldung: 08.04.2015
(73) Patentinhaber: KNORR-BREMSE Systeme für Schienenfahrzeuge GmbH, 80809 München (DE)
(72) Erfinder: AURICH, Stefan, 86316 Friedberg (DE); GRUNWALD, Torsten, 82418 Seehausen am Staffelsee (DE); SEIDENSCHWANG, Alexander, 80804 München (DE)
(74) Vertreter: Prüfer & Partner mbB Patentanwälte · Rechtsanwälte
(86) Internationale Anmeldenummer: PCT/EP2013/060708
(87) Internationale Veröffentlichungsnummer: WO 2013/174965

(56) Entgegenhaltungen:
- EP-B1- 1 747 132
- DE-A1- 2 749 161
- DE-A1-102009 051 019
- DE-A1-102010 005 091
- DE-A1-102010 053 683
- US-A1- 2004 119 331

## Beschreibung

Die Erfindung betrifft ein Verfahren zur Steuerung einer eine geregelte elektro-pneumatische Bremseinrichtung mit Bremsdruckregelung sowie eine ungeregelte Bremsdrucksteuereinrichtung zur Erzeugung eines ungeregelten Bremsdrucks sowie wenigstens einen pneumatischen Bremsaktuator aufweisenden Druckluftbremseinrichtung eines Schienenfahrzeugs im Falle einer Zwangs-, Schnell- oder Notbremsung, gemäß dem Oberbegriff von Anspruch 1 sowie eine solche Druckluftbremseinrichtung gemäß dem Oberbegriff von Anspruch 10.

Der Einsatz von reibungsbasierten Bremsen in Fahrzeugen, insbesondere von Scheibenbremsen in Schienenfahrzeugen ist dadurch begrenzt, dass die Bremsscheiben nur eine begrenzte Energie aufnehmen können, die Bremsbeläge nur bis zu einer bestimmten Grenztemperatur standfest sind, die Bremsscheiben können nur mit einer begrenzten Bremsleistung beaufschlagt werden, und der maximale Haftwert ist von der Relativgeschwindigkeit zwischen Bremsscheibe und Bremsbelag abhängig ist. Daher werden Bremssysteme von Hochgeschwindigkeitszügen in der Regel mit mindestens zwei geschwindigkeitsabhängigen Stufen ausgeführt, wobei bei höheren Geschwindigkeiten mit geringerer Bremskraft gebremst wird als bei niedrigeren Geschwindigkeiten, um zu vermeiden dass die Bremsen bei höheren Geschwindigkeiten zu früh verschleißen oder Beanspruchungsgrenzen erreichen.

Zwangs-, Schnell- und Notbremsungen müssen mit einem hohen Sicherheitsniveau ausgeführt werden. Daher sind hierzu in der Regel nur mechanisch-pneumatische Komponenten (Steuerventil, Relaisventil) mit einem pneumatischen Signalweg, insbesondere über eine Hauptluftleitung HL oder elektro-pneumatische Komponenten mit einem elektrischen, durch eine Sicherheitsschleife gebildeten elektrischen Signalweg im Einsatz. Für solche Komponenten ist kein Sicherheitsnachweis erforderlich. Mit diesen Komponenten ist zwar eine oben bereits beschriebene gestufte Ansteuerung der Bremse abhängig von der Geschwindigkeit möglich, jedoch kann damit die Leistungsfähigkeit der Bremse innerhalb ihrer Belastungsgrenzen nicht vollständig ausgenutzt werden.

Dokument DE 27 49 161 A1 offenbart ein pneumatisches Lokomotiv-Bremssystem mit einem ersten Bremskreis, der zur direkten Bremsung der Lokomotive dient und an einen Druckluftbehälter angeschlossen ist sowie Entlüftungsventile zum Lösen der Lokomotivbremsen aufweist, und einem zweiten Bremskreis, der die Zugbremsluft zu entspannen und einen gegebenenfalls an die Lokomotive angekuppelten Zug zu bremsen bzw. Druckluft zum Lösen der Zugbremsen zu liefern vermag, gekennzeichnet durch einen Hauptdruckluftbehälter, einen Zusatzdruckluftbehälter und ein doppeltes Hauptbremsventil mit zwei gemeinsam betätigten Teilen, von denen der eine beim Bremsen den Hauptdruckluftbehälter zur direkten Bremsung der Lokomotive mit deren Bremsen zu verbinden vermag, während der andere Teil des Hauptbremsventils beim Bremsen die Zugbremsleitung zur indirekten Bremsung des angekuppelten Zuges zu entlüften vermag, und ein zweites Ventil, mit dem die Zugbremsleitung bei gelösten Bremsen mit dem Zusatzbehälter verbindbar ist.

Eine geschwindigkeitsabhängig gestufte Notbremseinrichtung eines Schienenfahrzeugs wird beispielsweise in der DE 10 2009 051 019 A1 beschrieben.

In diesem Dokument wird ein hierarchischer Ablauf einer Notbremsung dargestellt, wobei eine Notbremsung zunächst durch Zusammenwirken einer generatorischen Bremse mit einer elektro-pneumatischen Bremse bremskraftgeregelt sowie geschwindigkeitsabhängig im Sinne eines Bremsenblendings durchgeführt wird. Bei einem Ausfall der generatorischen Bremse wird die Notbremskraft alleine mit der geregelten elektro-pneumatischen Bremse sowie geschwindigkeitsabhängig durchgeführt. Fällt die elektro-pneumatische Bremse aus, wird die Notbremskraft durch eine zusätzliche elektro-magnetische Notbremsventileinrichtung geschwindigkeitsabhängig gesteuert. Demnach wird bei ausgefallener generatorischer Bremse im Notbremsfall entweder die elektro-pneumatische Bremse oder bei deren Versagen die zusätzliche elektro-magnetische Notbremsventileinrichtung aktiviert, jedoch werden beide Systeme niemals gemeinsam aktiviert.

Gegenüber einer geschwindigkeitsabhängig gestuften Steuerung der Bremskräfte bei Zwangs-, Schnell- und Notbremsungen bietet eine kontinuierliche und stufenlose Regelung der Bremskraft bzw. des Bremsdrucks die Möglichkeit, stetige Kennlinien hinsichtlich eines von der Geschwindigkeit abhängigen Sollwerts für den Bremsdruck bzw. für die Bremskraft zu verwenden und damit sowohl die Leitungsfähigkeit der Bremse innerhalb ihrer Belastungsgrenzen besser auszunutzen als auch eine bessere Annäherung an normative Anforderungen bzw. Vorschriften zu gewährleisten. Nachteil einer solchen kontinuierlichen, stufenlosen Regelung der Bremskraft bzw. des Bremsdrucks ist jedoch, dass ein Sicherheitsnachweis erforderlich ist, welcher in der Regel aufwändig zu erstellen ist und für jede Neuprojektierung einer Bremse wiederholt werden muss.

### Aufgabe der Erfindung

Die Aufgabe der Erfindung besteht demgegenüber darin, ein Verfahren zur Steuerung einer Druckluftbremseinrichtung bzw. eine Druckluftbremseinrichtung zur Verfügung zu stellen, welches bzw. welche mit geringem Aufwand eine hohe Sicherheit im Zwangs-, Schnellbrems- oder Notbremsfall gewährleistet.

Diese Aufgabe wird erfindungsgemäß durch die Merkmale der nebengeordneten Patentansprüche 1 und 10 gelöst.

### Offenbarung der Erfindung

Erfindungsgemäß wird ein Verfahren zur Steuerung einer eine geregelte elektro-pneumatische Bremseinrichtung mit Bremsdruck-, Bremskraft- oder Verzögerungsregelung und eine ungeregelte Bremsdrucksteuereinrichtung zur Erzeugung eines geschwindigkeitsabhängig gestuften Bremsdrucks sowie wenigstens einen pneumatischen Bremsaktuator aufweisenden Druckluftbremseinrichtung eines Schienenfahrzeugs im Falle einer Zwangs-, Schnell- oder Notbremsung vorgestellt, bei welchem auf ein Signal zur Auslösung einer Zwangs-, Schnell- oder Notbremsung hin
a) die geregelte elektro-pneumatische Bremseinrichtung und die ungeregelte Bremsdrucksteuereinrichtung gleichzeitig oder parallel aktiviert werden und
b) ein erster Wert für den von der geregelten elektro-pneumatischen Bremseinrichtung erzeugten Bremsdruck oder ein erster Wert für einen diesen Bremsdruck repräsentierenden Vorsteuerdruck und ein zweiter Wert für den von der ungeregelten Bremsdrucksteuereinrichtung erzeugten Bremsdruck oder ein zweiter Wert für einen diesen Bremsdruck repräsentierenden Vorsteuerdruck verglichen werden, wobei dieser Vergleich durch Einwirkung des ersten Werts und des zweiten Werts auf mechanische Komponenten einer ausschließlich pneumatisch-mechanischen Vergleichseinrichtung erfolgt und
c) abhängig von diesem Vergleich ein Bremsdruck auf der Basis ausschließlich des ersten Werts oder ausschließlich auf der Basis des zweiten Werts oder auf der Basis des ersten Werts und des zweiten Werts in den wenigstens einen pneumatischen Bremsaktuator eingesteuert wird,
wobei die ungeregelte Bremsdrucksteuereinrichtung so ausgebildet ist, um einen Bremsdruck zu erzeugen, welcher geschwindigkeitsabhängig gestuft ist.

Unter einem "Vergleich des ersten Werts mit dem zweiten Wert" soll verstanden werden, dass der ersten Wert und der zweiten Wert in eine relative Beziehung zueinander gestellt werden, ohne dass hierzu notwendigerweise absolute Werte wie etwa absolute Bremsdruckwerte ermittelt werden.

Unter "dieser Vergleich durch Einwirkung des ersten Werts und des zweiten Werts auf mechanische Komponenten einer ausschließlich pneumatisch-mechanischen Vergleichseinrichtung erfolgt" soll verstanden werden, dass ausschließlich pneumatische Signale in Form des ersten Werts und/oder des zweiten Werts herangezogen werden, um auf ausschließlich mechanische Komponenten, wie etwa einen beweglichen Ventilkörper eines Wechselventils oder Doppelrückschlagventils zu wirken, um ein Resultat des Vergleichs zu liefern, wie beispielsweise eine Durchsteuerung des jeweils größeren Werts des ersten und zweiten Werts ("select-high") oder des jeweils kleineren Werts des ersten und zweiten Werts ("select-low") oder auch eine Neubildung eines Werts, in welchen der erste Wert und der zweite Wert eingeht, beispielsweise durch Addition oder Subtraktion bzw. durch ein Verhältnis zwischen dem ersten und zweiten Wert. Hierzu können beispielsweise Wirkflächen des Ventilkörpers eines Wechselventils hinsichtlich ihrer Größe entsprechend hergerichtet werden. In diesem Fall erfolgt der Vergleich des ersten Werts mit dem zweiten Wert beispielsweise anhand der Größe der Wirkflächen des durch den ersten Wert und den zweiten Wert gegenläufig belasteten Ventilkörpers.

Insbesondere sollen keine elektrischen oder elektronischen Komponenten an dem Vergleich des ersten Werts mit dem zweiten Wert beteiligt werden, um einen Sicherheitsnachweis für die elektrischen oder elektronischen Komponenten zu vermeiden. Da für solche rein pneumatisch-mechanischen Mittel kein Sicherheitsnachweis zu erbringen ist, kann das erfindungsgemäße Verfahren mit vergleichsweise geringem Realisierungsaufwand durchgeführt werden.

Besonders bevorzugt sind in einem Speicher eines Steuergeräts der geregelten elektro-pneumatischen Bremseinrichtung Kennlinien abgespeichert, in welchen die Abhängigkeit eines von der Geschwindigkeit des Schienenfahrzeugs abhängigen Sollwerts für den Bremsdruck, für den Vorsteuerdruck bzw. für die Bremskraft abgelegt ist. Damit kann die eingangs erwähnte geschwindigkeitsabhängige Anpassung der Bremskraft zur Verschleißvermeidung in stetiger Weise erfolgen.

Die ungeregelte Bremsdrucksteuereinrichtung ist ausgebildet, um einen Bremsdruck zu erzeugen, welcher geschwindigkeitsabhängig gestuft ist. Dies bedeutet, dass sich der Wert des ausgesteuerten Bremsdrucks in Abhängigkeit von der Geschwindigkeit stufenartig ändert. Damit erfolgt die eingangs erwähnte geschwindigkeitsabhängige Anpassung der Bremskraft zur Verschleißvermeidung, wenn auch nicht stetig, sondern gestuft. Insbesondere findet in der pneumatisch-mechanischen Vergleichseinrichtung eine gewichtete Maximalauswahl (gewichtetes "select high") zwischen dem ersten Wert und dem zweiten Wert statt. Solange beispielsweise der erste Wert um nicht mehr als ein vorgegebener Bruchteil unterhalb des zweiten Werts liegt, wird besonders bevorzugt der Bremsdruck durch den ersten Wert und andernfalls durch den zweiten Wert gebildet und in den wenigstens einen pneumatischen Bremsaktuator eingesteuert. Dabei beträgt der vorgegebene Bruchteil ungefähr 30%.

Als mechanisch-pneumatische Vorrichtung wird beispielsweise ein Wechselventil, ein Doppelrückschlagventil oder ein Relaisventil verwendet, welche allesamt pneumatisch-mechanische Mittel im Sinne der Erfindung darstellen und ohne elektrische oder elektronische Mittel auskommen, um den Vergleich zwischen dem ersten Wert und dem zweiten Wert durchführen zu können. Der erste Wert und der zweite Wert stehen dann jeweils an einem Eingangsanschluss der oben erwähnten mechanisch-pneumatischen Komponenten an und belasten beispielsweise in gegenläufiger Weise Wirkflächen von Kolben oder Ventilkörpern.

Gemäß einer Weiterbildung ist die ungeregelte Bremsdrucksteuereinrichtung eine bekannte indirekte Bremse, welche abhängig von einem Hauptluftleitungsdruck in einer Hauptluftleitung HL einen ungeregelten Bremsdruck oder einen ungeregelten Vorsteuerdruck als zweiten Wert erzeugt. Dabei kann der Hauptluftleitungsdruck von einer Steuerventileinrichtung elektro-pneumatisch beeinflusst sein, welche ein Bremsmagnetventil und ein Lösemagnetventil beinhaltet.

Demgegenüber ist die geregelte elektro-pneumatische Bremseinrichtung bevorzugt eine bekannte direkte elektro-pneumatische Bremseinrichtung, mit einem elektro-pneumatischen Bremsdruckregler, welcher mit Hilfe eines Bremsmagnetventils, eines Lösemagnetventils, eines Drucksensors sowie eines elektronischen Steuergeräts auf der Basis eines in einer Hauptluftbehälterleitung HB geführten Hauptluftbehälterleitungsdrucks einen geregelten Bremsdruck oder einen geregelten Vorsteuerdruck als ersten Wert erzeugt.

Die Erfindung betrifft auch eine Druckluftbremseinrichtung eines Schienenfahrzeugs beinhaltend eine geregelte elektro-pneumatische Bremseinrichtung mit Bremsdruckregelung, eine ungeregelte Bremsdrucksteuereinrichtung zur Erzeugung eines ungeregelten Bremsdrucks, eine Steuerung zur Steuerung der Bremseinrichtungen, wenigstens einen pneumatischen Bremsaktuator, sowie mit der Steuerung zusammen wirkende Signalmittel wenigstens zur Erzeugung eines Signals zur Auslösung einer Zwangs-, Schnell- oder Notbremsung, wobei die Steuerung derart ausgebildet ist, dass sie auf ein von den Signalmitteln ausgesteuertes Signal zur Auslösung einer Zwangs-, Schnell- oder Notbremsung hin die geregelte elektro-pneumatische Bremseinrichtung und die ungeregelte Bremsdrucksteuereinrichtung gleichzeitig aktiviert.

Dabei ist eine ausschließlich pneumatisch-mechanische Vergleichseinrichtung vorgesehen, durch welche ein erster Wert für den von der geregelten, elektro-pneumatischen Bremseinrichtung erzeugten Bremsdruck oder ein erster Wert für einen diesen Bremsdruck repräsentierenden Vorsteuerdruck und ein zweiter Wert für den von der ungeregelten Bremsdrucksteuereinrichtung erzeugten Bremsdruck oder ein zweiter Wert für einen diesen Bremsdruck repräsentierenden Vorsteuerdruck miteinander verglichen werden, wobei dieser Vergleich durch Einwirkung des ersten Werts und des zweiten Werts auf mechanische Komponenten der ausschließlich pneumatisch-mechanischen Vergleichseinrichtung erfolgt.

Die pneumatisch-mechanische Vergleichseinrichtung ist dabei weiterhin derart ausgebildet, dass sie abhängig von diesem Vergleich einen Bremsdruck für den wenigstens einen pneumatischen Bremsaktuator oder einen diesen Bremsdruck repräsentierenden Vorsteuerdruck auf der Basis ausschließlich des ersten Werts oder ausschließlich auf der Basis des zweiten Werts oder auf der Basis des ersten Werts und des zweiten Werts erzeugt. Die ungeregelte Bremsdrucksteuereinrichtung ist so ausgebildet, um einen Bremsdruck zu erzeugen, welcher geschwindigkeitsabhängig gestuft ist.

Gemäß einer Weiterbildung ist der mechanisch-pneumatischen Vergleichseinrichtung und dem wenigstens einen Bremsaktuator ein Durchsatzverstärker, beispielsweise in Form eines Relaisventils zwischengeschaltet.

Nicht zuletzt können die Signalmittel zur Erzeugung des Signals zur Auslösung einer Zwangs-, Schnell- oder Notbremsung wenigstens eine elektrische Sicherheitsschleife beinhalten.

Weitere die Erfindung verbessernde Maßnahmen werden nachstehend gemeinsam mit der Beschreibung eines bevorzugten Ausführungsbeispiels der Erfindung anhand der Zeichnung näher dargestellt.

### Zeichnung

Nachstehend ist ein Ausführungsbeispiel der Erfindung in der Zeichnung dargestellt und in der nachfolgenden Beschreibung näher erläutert. In der Zeichnung zeigt
Fig.1 : ein stark vereinfachtes Schema einer bevorzugten Ausführungsform eines Verfahrens zur Steuerung eines Druckluftbremssystems eines Schienenfahrzeugs;
Fig.2 : ein Diagramm für die Bremskraft F in Abhängigkeit von der Geschwindigkeit des Schienenfahrzeugs.

### Beschreibung des Ausführungsbeispiels

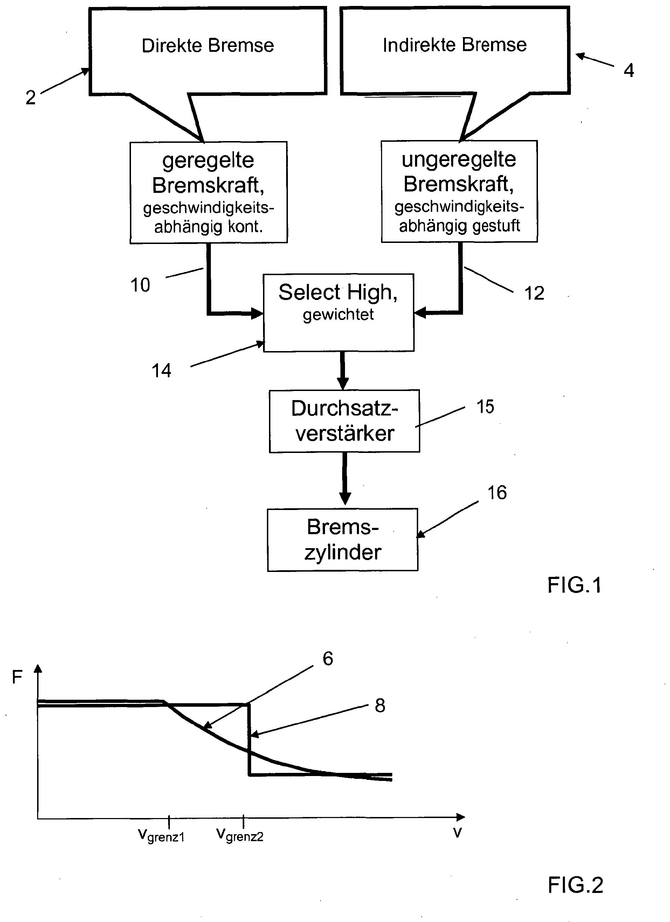

In Fig.1 ist ein stark vereinfachtes Schema einer bevorzugten Ausführungsform eines Verfahrens zur Steuerung einer Druckluftbremseinrichtung eines Schienenfahrzeugs oder eines aus mehreren Schienenfahrzeugen gebildeten Zugs gezeigt, welche eine direkt wirkende bremsdruckgeregelte elektro-pneumatische Bremseinrichtung ("direkte Bremse") 2 und eine indirekt wirkende Bremse mit ungeregelter Bremsdrucksteuerung ("indirekte Bremse") 4 beinhaltet. Im Folgenden wird der Aufbau der direkten Bremse 2 und der indirekten Bremse 4 kurz erläutert.

Durch das Schienenfahrzeug oder durch den Zug ist eine Hauptluftbehälterleitung HB gezogen, welche von einer Druckluftquelle, beispielsweise einem Kompressor mit Druckluft unter Hauptluftbehälterleitungsdruck versorgt wird. Die Hauptluftbehälterleitung HB versorgt die direkte Bremse 2 wie auch die indirekte Bremse 4 mit Druckluft. Weiterhin ist eine von einem Führerbremsventil gesteuerte Hauptluftleitung HL vorhanden, welche zur Steuerung der indirekten Bremse 4 dient.

Die direkte Bremse 2 weist einen elektro-pneumatischen Druckregler auf, in dem die von einer Steuerelektronik eines Bremssteuergeräts über Signalleitungen vorgegebene elektrische Befehle in pneumatische Signale, insbesondere in einen Vorsteuerdruck für ein nachgeschaltetes Relaisventil oder einen Einheitsdruckumsetzer umgesetzt werden. Der elektro-pneumatische Druckregler wird durch ein Bremsmagnetventil, ein Lösemagnetventil, durch einen Drucksensor sowie durch das elektronische Bremssteuergerät gebildet. Das Bremsmagnetventil und das Lösemagnetventil übernehmen dabei die Funktion des stufenlosen und schnellen Druckaufbaus bzw. Druckabbaus. Der Drucksensor dient zur Messung des eingeregelten Vorsteuerdrucks. Der elektro-pneumatische Druckregler bildet zusammen mit dem elektronischen Bremssteuergerät einen Druckregelkreis, bei welchem ein Vorsteuerdruck für das Relaisventil eingeregelt wird. Abhängig von dem geregelten Vorsteuerdruck wird durch das Relaisventil dann ein Bremsdruck für wenigstens einen pneumatischen Bremszylinder als Bremsaktuator erzeugt. Weiterhin kann das Relaisventil den Bremsdruck lastabhängig und auch geschwindigkeitsabhängig bilden. Der Bremsdruck wird somit mittels der direkten Bremse 2 kontinuierlich und stufenlos geregelt gebildet. Eine solche direkte Bremse 2 ist an sich bekannt, beispielsweise aus der eingangs diskutierten DE 10 2009 051 019 A1. Deshalb soll hier nicht weiter darauf eingegangen werden.

Die direkte Bremse 2 wird unter anderem bei Betriebsbremsungen zur Unterstützung einer priorisierten elektrodynamischen Bremse eingesetzt, und dient auch als redundante Rückfallebene bei einem Ausfall der elektrodynamischen Bremse. Im Rahmen der Erfindung wird die direkte Bremse 2 jedoch auch für Zwangs-, Not- oder Schnellbremsungen eingesetzt, wie noch später gezeigt werden wird.

Gemäß dem in Fig.2 gezeigten Diagramm 6 für die direkte Bremse 2 sind in einem Speicher des elektronischen Bremssteuergeräts der direkten Bremse 2 Kennlinien abgespeichert, in welchen die Abhängigkeit eines von der Geschwindigkeit v des Schienenfahrzeugs abhängigen Sollwerts für die Bremskraft F bzw. den Bremsdruck oder Vorsteuerdruck abgelegt ist. Damit erfolgt eine geschwindigkeitsabhängige Anpassung der Bremskraft F bzw. des Bremsdrucks oder Vorsteuerdrucks zur Verschleißvermeidung in stetiger Weise. Im vorliegenden Fall wird beispielsweise die Bremskraft F und damit der Soll-Vorsteuerdruck der direkten Bremse 2 im Rahmen der Bremsdruckregelung ab einer Geschwindigkeit vgrenz1 ausgehend von einem konstanten Geschwindigkeitswert in einem Geschwindigkeitsbereich 0 < v < vgrenz1 kontinuierlich reduziert.

Die indirekte Bremse 4 wird vornehmlich für Zwangs-, Not- und Schnellbremsungen eingesetzt. In jedem Führerstand hat der Fahrer ein Führerbremsventil zum Betätigen der indirekten Bremse 4 zur Verfügung. Über das Führerbremsventil kann der Fahrer die Hauptluftleitung HL stufenlos entlüften und damit den Druck von 5 bar (Lösedruck) absenken. Bei Absenkung um 1,5 bar ist die höchste Bremsstufe erreicht. Eine weitere Druckabsenkung hat keinen weiteren Effekt. Bei einer Zwangs-, Schnell- oder Notbremsung wird zur Verkürzung der Brems- und Ansprechzeiten die Hauptluftleitung HL schlagartig entlüftet. Hierbei wird der Druck in der Hauptluftleitung HL durch Betätigen eines Notschalttasters im Führerstand und hieraus resultierendem Öffnen einer elektrischen Sicherheitsschleife abgesenkt und damit die Zwangs-, Schnell- oder Notbremsung für die indirekte Bremse 4 ausgelöst. Der Hauptluftleitungsdruck, welcher die Brems- und Lösebefehle des Triebfahrzeugführers transportiert, wird in den einzelnen Wagen durch ein Steuerventil in einen Vorsteuerdruck oder den Bremszylinderdruck umgesetzt. Ein fallender Hauptluftleitungsdruck (im Bereich zwischen dem Lösedruck von 5 bar und dem Druck der höchsten Bremsstufe) bewirkt dabei einen steigenden Bremsdruck oder Vorsteuerdruck. Diese bekannte indirekte Bremse 4 kann durch eine elektrische Ansteuereinrichtung ergänzt werden. Die elektrischen Steuersignale für die Steuerventileinrichtung werden im führenden Fahrzeug parallel zum Hauptluftleitungsdruck in der Hauptluftleitung HL erzeugt und über elektrische Leitungen in alle Schienenfahrzeuge des Zugs übertragen. Hierdurch wird eine zeitgleiche Ansteuerung der Steuerventileinrichtungen der indirekten Bremsen aller Schienenfahrzeuge des Zugverbands erreicht. Das Steuerventil enthält in diesem Fall ein Lösemagnetventil und ein Bremsmagnetventil.

Wie bei der direkten Bremse 2 kann auch der Vorsteuerdruck der indirekten Bremse 4 in ein Relaisventil eingesteuert werden. Weiterhin ist das Relaisventil bevorzugt ausgebildet, dass es den Bremsdruck geschwindigkeitsabhängig in wenigstens zwei Stufen steuert, wobei bei höheren Geschwindigkeiten mit einem geringeren Bremsdruck gebremst wird als bei niedrigeren Geschwindigkeiten.

Dieser Sachverhalt ist in Fig.2 anhand des Diagramms 8 für die indirekte Bremse 4 gezeigt, wobei der von der indirekten Bremse ausgesteuerte Bremsdruck und damit die Bremskraft F für einen Geschwindigkeitsbereich 0 < v < vgrenz2konstant ist und ab der Geschwindigkeit vgrenz2dann stufenartig reduziert wird. Somit wird die Bremskraft F bzw. der Bremsdruck abhängig von der Geschwindigkeit v hier beispielsweise zweistufig gesteuert. Natürlich sind auch mehr als zwei Stufen denkbar.

Anstatt einer indirekten Bremse 4 kann auch eine einfache Notbremsventileinrichtung wie sie beispielsweise in der eingangs diskutierten DE 10 2009 051 019 A1 beschrieben wird, herangezogen werden, um mittels eines durch die Sicherheitsschleife gesteuertes Notbremsventils einen gesteuerten Bremsdruck bzw. gesteuerten Vorsteuerdruck zu erzeugen, welcher dann optional noch geschwindigkeitsabhängig gestuft wird. Dieser Bremsdruck bzw. Vorsteuerdruck kann beispielsweise von einem Vorratsdruck eines Druckreservoirs wie einer Hauptluftbehälterleitung HB abgeleitet und durch ein Druckbegrenzungsventil auf einen bestimmten Druckwert begrenzt sein. Im Allgemeinen ist jeder ungeregelte Bremskreis tauglich, welcher einen ungeregelten Bremsdruck bzw. einen ungeregelten Vorsteuerdruck aussteuert, der zudem optional geschwindigkeitsabhängig gestuft werden kann.

Im Folgenden wird das in der Fig.1 schematisiert dargestellte Verfahren zur Steuerung der Druckluftbremseinrichtung für den Fall einer Zwangs-, Schnell- oder Notbremsung bzw. die Druckluftbremseinrichtung selbst näher beschrieben. Auf ein beispielsweise über die elektrische Sicherheitsschleife erzeugtes Signal zur Auslösung der Zwangs-, Schnell- oder Notbremsung hin, welches in eine dort aus Maßstabsgründen nicht dargestellten Steuerung der Druckluftbremseinrichtung eingesteuert wird, werden von der Steuerung zunächst die direkte Bremse 2 und die indirekte Bremse 4 gleichzeitig aktiviert.

Dabei werden von der pneumatisch-mechanischen Vergleichseinrichtung 14 ein erster Wert 10 für den von der direkten Bremse 2 erzeugten Bremsdruck oder ein erster Wert 10 für einen diesen Bremsdruck repräsentierenden Vorsteuerdruck und ein zweiter Wert 12 für den von der indirekten Bremse erzeugten Bremsdruck oder ein zweiter Wert 12 für einen diesen Bremsdruck repräsentierenden Vorsteuerdruck miteinander verglichen, wobei dieser Vergleich durch gegenläufige Einwirkung des ersten Werts 10 und des zweiten Werts 12 beispielsweise auf Wirkflächen eines beweglichen Ventilkörpers eines Wechselventils oder Doppelrückschlagventils 14 erfolgt. Bei einem solchen Wechselventil oder Doppelrückschlagventil 14 werden die Wirkflächen des beweglichen Ventilkörpers durch die an den beiden Eingängen anstehenden Drücke, hier erster Wert 10 und zweiter Wert 12 belastet und abhängig von einer Verschiebung des Ventilkörpers, einer der beiden Drücke an den Ausgang des Wechselventils durchgesteuert.

Beispielsweise sind der eine Eingang des Wechselventils 14 mit der direkten Bremse 2 zur Einsteuerung des ersten Werts 10, der andere Eingang des Wechselventils 14 mit der indirekten Bremse 4 zur Einsteuerung des zweiten Werts 14 und der Ausgang des Wechselventils 14 mit wenigstens einem Bremszylinder 16 zum Aussteuern des Bremsdrucks bzw. mit einem Durchsatzverstärker 15 verbunden, um auf der Basis eines am Ausgang des Wechselventils 14 anstehenden Vorsteuerdrucks einen entsprechenden Bremsdruck in den Bremszylinder 16 einzusteuern.

Wenn die beiden Drücke der indirekten Bremse und der direkten Bremse als Vorsteuerdrücke gebildet werden, was technisch sinnvoll ist, um dem nachgeschalteten Bremszylinder 16 genügend Arbeitsdruckluft zur Verfügung zu stellen, dann ist dem Ausgang des Wechselventils 14 und dem Bremszylinder 16 vorzugsweise ein Durchsatzverstärker zwischengeordnet, bevorzugt in Form eines Relaisventils 15.

Dem Fachmann ist die Wirkungsweise eines solchen, an seinen Eingangsanschlüssen unter verschiedenen Druckwerten stehenden Wechselventils oder Doppelrückschlagventils 14 hinlänglich bekannt. Deshalb soll hier nicht weiter darauf eingegangen werden. Der erste Wert 10 und der zweite Wert 12 sollen dabei jeweils von Null verschieden sein, weil beide Bremsen, die direkte Bremse 2 und die indirekte Bremse 4 im Falle einer Zwangs-, Sicherheits- oder Notbremsung aktiviert werden.

Das Wechselventil oder Doppelrückschlagventil 14 kann dabei derart ausgebildet sein, dass es den größeren Wert des ersten Werts und des zweiten Werts als Bremsdruck an seinen Ausgang und damit an den wenigstens einen pneumatischen Bremszylinder aussteuert ("select high"). Dabei wird eine Maximalauswahl zwischen dem ersten Wert 10 und dem zweiten Wert 12 getroffen und als Vorsteuerdruck an das Relaisventil 15 weiter gesteuert, das dann den Bremszylinderdruck für den Bremszylinder 16 erzeugt.

Hier ist das Wechselventil 14 vorzugsweise darüber hinaus ausgebildet, dass es eine gewichtete Maximalauswahl zwischen dem ersten Wert 10 und dem zweiten Wert 12 trifft. Dabei soll beispielsweise, solange der erste Wert 10 um nicht mehr als ein vorgegebener Bruchteil unterhalb des zweiten Werts 12 liegt, der am Ausgang des Wechselventils ausgesteuerte Bremsdruck durch den ersten Wert 10 und andernfalls durch den zweiten Wert 12 gebildet werden. Der vorgegebene Bruchteil beträgt beispielsweise ungefähr 30%. Im vorliegenden Fall wird daher die direkte Bremse priorisiert, weil diese gemäß Fig.2 in stetig kontinuierlicher Weise den Sollwert für die Bremskraft bzw. für den Bremsdruck bzw. für den Vorsteuerdruck geschwindigkeitsabhängig anpasst und erst dann die indirekte Bremse herangezogen, wenn der durch die direkte Bremse erzeugte Bremsdruck bzw. Vorsteuerdruck zu niedrig ist.

Die gewichtete Maximalauswahl kann beispielsweise dadurch realisiert sein, dass der Ventilkörper des Wechselventils durch Federvorspannung in einer Richtung vorgespannt wird und/oder die Wirkflächen des Ventilkörpers für den ersten Wert und den zweiten Wert unterschiedlich groß sind.

Gemäß einer weiteren Ausführungsform könnte anstatt eines Wechselventils 14 eine andere mechanisch-pneumatische Vergleichseinrichtung verwendet werden, welche aus den an seinen Eingängen anstehenden ersten Wert und zweiten Wert einen Bremsdruck für den wenigstens einen Bremszylinder 16 bzw. einen Vorsteuerdruck für den Durchsatzverstärker 15 bildet, welcher auf der Basis beider Werte erzeugt wird. Das heißt, es geht jeweils ein von Null verschiedener erster Wert 10 und zweiter Wert 12 in den Bremsdruck bzw. in den Vorsteuerdruck ein, beispielsweise durch Addition der beiden Werte oder durch ihre Subtraktion. Die Vorgehensweise, beide Werte 10, 12 miteinander zu verbinden oder in Beziehung zueinander zu setzen ist dabei beliebig.

### Bezugszeichenliste

2 : direkte Bremse
4 : indirekte Bremse
6 : Diagramm
8 : Diagramm
10 : erster Wert
12 : zweiter Wert
14 : Wechselventil
15 : Durchsatzverstärker
16 : Bremszylinder

## Patentansprüche

1. Verfahren zur Steuerung einer eine geregelte elektro-pneumatische Bremseinrichtung (2) mit Bremsdruckregelung und eine ungeregelte Bremsdrucksteuereinrichtung (4) zur Erzeugung eines ungeregelten Bremsdrucks sowie wenigstens einen pneumatischen Bremsaktuator (16) aufweisenden Druckluftbremseinrichtung eines Schienenfahrzeugs im Falle einer Zwangs-, Schnell- oder Notbremsung,
auf ein Signal zur Auslösung einer Zwangs-, Schnell- oder Notbremsung hin
a) die geregelte elektro-pneumatische Bremseinrichtung (2) und die ungeregelte Bremsdrucksteuereinrichtung (4) gleichzeitig aktiviert
werden **dadurch kennzeichnet, dass**
b) ein erster Wert (10) für den von der geregelten, elektro-pneumatischen Bremseinrichtung (2) erzeugten Bremsdruck oder ein erster Wert (10) für einen diesen Bremsdruck repräsentierenden Vorsteuerdruck und ein zweiter Wert (12) für den von der ungeregelten Bremsdrucksteuereinrichtung (4) erzeugten Bremsdruck oder ein zweiter Wert (12) für einen diesen Bremsdruck repräsentierenden Vorsteuerdruck miteinander verglichen werden, wobei dieser Vergleich durch Einwirkung des ersten Werts (10) und des zweiten Werts (12) auf mechanische Komponenten einer ausschließlich pneumatisch-mechanischen Vergleichseinrichtung (14) erfolgt, und
c) abhängig von diesem Vergleich ein Bremsdruck auf der Basis ausschließlich des ersten Werts (10) oder ausschließlich auf der Basis des zweiten Werts (12) oder auf der Basis des ersten Werts (10) und des zweiten Werts (12) in den wenigstens einen pneumatischen Bremsaktuator (16) eingesteuert wird; wobei
die ungeregelte Bremsdrucksteuereinrichtung (4) ausgebildet ist, um einen Bremsdruck zu erzeugen, welcher geschwindigkeitsabhängig gestuft ist.

2. Verfahren nach Anspruch 1, **dadurch gekennzeichnet, dass** in einem Speicher eines Steuergeräts der geregelten elektro-pneumatischen Bremseinrichtung (2) Kennlinien abgespeichert sind, in welchen die Abhängigkeit eines von der Geschwindigkeit des Schienenfahrzeugs abhängigen Sollwerts für den Bremsdruck bzw. für die Bremskraft abgelegt ist.

3. Verfahren nach einem der vorhergehenden Ansprüche, **dadurch gekennzeichnet, dass** solange der erste Wert (10) um nicht mehr als ein vorgegebener Bruchteil unterhalb des zweiten Werts (12) liegt, der Bremsdruck oder ein diesen repräsentierender Vorsteuerdruck durch den ersten Wert (10), andernfalls durch den zweiten Wert (12) gebildet wird.

4. Verfahren nach Anspruch 3, **dadurch gekennzeichnet, dass** der vorgegebene Bruchteil ungefähr 30% beträgt.

5. Verfahren nach einem der vorhergehenden Ansprüche, **dadurch gekennzeichnet, dass** als mechanisch-pneumatische Vergleichseinrichtung (14) wenigstens ein Wechselventil herangezogen wird.

6. Verfahren nach einem der vorhergehenden Ansprüche, **dadurch gekennzeichnet, dass** die ungeregelte Bremsdrucksteuereinrichtung (4) eine indirekte Bremse ist, welche abhängig von einem Hauptluftleitungsdruck in einer Hauptluftleitung (HL) einen ungeregelten Bremsdruck oder einen ungeregelten Vorsteuerdruck als zweiten Wert (12) erzeugt.

7. Verfahren nach einem der vorhergehenden Ansprüche, **dadurch gekennzeichnet, dass** die geregelte elektro-pneumatische Bremseinrichtung (2) eine direkte elektro-pneumatische Bremseinrichtung ist, mit einem elektro-pneumatischen Druckregler, welcher mit Hilfe eines Bremsmagnetventils, eines Lösemagnetventils, eines Drucksensors sowie eines elektronischen Steuergeräts auf der Basis eines in einer Hauptluftbehälterleitung HB geführten Hauptluftbehälterleitungsdrucks einen geregelten Bremsdruck oder einen geregelten Vorsteuerdruck als ersten Wert (10) erzeugt.

8. Verfahren nach einem der vorhergehenden Ansprüche, **dadurch gekennzeichnet, dass** das Signal zur Auslösung einer Zwangs-, Schnell- oder Notbremsung über eine elektrische Sicherheitsschleife ausgesteuert wird.

9. Verfahren nach einem der vorhergehenden Ansprüche, **dadurch gekennzeichnet, dass** auf der Basis ausschließlich des ersten Werts (10) oder ausschließlich auf der Basis des zweiten Werts (12) oder auf der Basis des ersten Werts (10) und des zweiten Werts (12) ein Vorsteuerdruck in einen Durchsatzverstärker (15) eingesteuert wird, aus welchem der Durchsatzverstärker (15) den Bremsdruck für den dem Durchsatzverstärker (15) nachgeordneten Bremsaktuator (16) bildet.

10. Druckluftbremseinrichtung eines Schienenfahrzeugs beinhaltend eine geregelte elektro-pneumatische Bremseinrichtung (2) mit Bremsdruckregelung, eine ungeregelte Bremsdrucksteuereinrichtung (4) zur Erzeugung eines ungeregelten Bremsdrucks, eine Steuerung zur Steuerung der Bremseinrichtungen (2; 4), wenigstens einen pneumatischen Bremsaktuator (16), sowie mit der Steuerung zusammen wirkende Signalmittel wenigstens zur Erzeugung eines Signals zur Auslösung einer Zwangs-, Schnell- oder Notbremsung, **dadurch gekennzeichnet, dass** die Steuerung derart ausgebildet ist, dass sie auf ein von den Signalmitteln ausgesteuertes Signal zur Auslösung einer Zwangs-, Schnell- oder Notbremsung hin
a) die geregelte elektro-pneumatische Bremseinrichtung (2) und die ungeregelte Bremsdrucksteuereinrichtung (4) gleichzeitig aktiviert, wobei
b) eine ausschließlich pneumatisch-mechanische Vergleichseinrichtung (14) vorgesehen ist, durch welche ein erster Wert (10) für den von der geregelten, elektro-pneumatischen Bremseinrichtung (2) erzeugten Bremsdruck oder ein erster Wert (10) für einen diesen Bremsdruck repräsentierenden Vorsteuerdruck und ein zweiter Wert (12) für den von der ungeregelten Bremsdrucksteuereinrichtung (4) erzeugten Bremsdruck oder ein zweiter Wert (12) für einen diesen Bremsdruck repräsentierenden Vorsteuerdruck miteinander verglichen werden, wobei dieser Vergleich durch Einwirkung des ersten Werts (10) und des zweiten Werts (12) auf mechanische Komponenten der ausschließlich pneumatisch-mechanischen Vergleichseinrichtung (14) erfolgt, und wobei
c) die pneumatisch-mechanischen Vergleichseinrichtung (14) weiterhin derart ausgebildet ist, dass sie abhängig von diesem Vergleich einen Bremsdruck für den wenigstens einen pneumatischen Bremsaktuator (16) oder einen diesen Bremsdruck repräsentierenden Vorsteuerdruck auf der Basis ausschließlich des ersten Werts (10) oder ausschließlich auf der Basis des zweiten Werts (12) oder auf der Basis des ersten Werts (10) und des zweiten Werts (12) erzeugt; wobei
die ungeregelte Bremsdrucksteuereinrichtung (4) ausgebildet ist, um einen Bremsdruck zu erzeugen, welcher geschwindigkeitsabhängig gestuft ist.

11. Druckluftbremseinrichtung nach Anspruch 10, **dadurch gekennzeichnet, dass** die mechanisch-pneumatische Vergleichseinrichtung (14) wenigstens ein Wechselventil beinhaltet.

12. Druckluftbremseinrichtung nach Anspruch 10 oder 11, **dadurch gekennzeichnet, dass** der mechanisch-pneumatischen Vergleichseinrichtung (14) und dem wenigstens einen Bremsaktuator (16) ein Durchsatzverstärker (15) zwischengeschaltet ist.

13. Druckluftbremseinrichtung nach einem der Ansprüche 10 bis 12, **dadurch gekennzeichnet, dass** in einem Speicher eines Steuergeräts der geregelten elektro-pneumatischen Bremseinrichtung (2) Kennlinien abgespeichert sind, in welchen die Abhängigkeit eines von der Geschwindigkeit des Schienenfahrzeugs abhängigen Sollwerts für den Bremsdruck bzw. für die Bremskraft abgelegt ist.

14. Druckluftbremseinrichtung nach einem der Ansprüche 10 bis 13, **dadurch gekennzeichnet, dass** die mechanisch-pneumatische Vergleichseinrichtung (14) derart ausgebildet ist, dass solange der erste Wert (10) um nicht mehr als ein vorgegebener Bruchteil unterhalb des zweiten Werts (12) liegt, der Bremsdruck oder der diesen repräsentierende Vorsteuerdruck durch den ersten Wert (10), andernfalls durch den zweiten Wert (12) gebildet wird.

15. Druckluftbremseinrichtung nach Anspruch 14, **dadurch gekennzeichnet, dass** der vorgegebene Bruchteil ungefähr 30% beträgt.

16. Druckluftbremseinrichtung nach einem der Ansprüche 10 bis 15, **dadurch gekennzeichnet, dass** die ungeregelte Bremsdrucksteuereinrichtung (4) eine indirekte Bremse ist, welche abhängig von einem Hauptluftleitungsdruck in einer Hauptluftleitung (HL) einen ungeregelten Bremsdruck oder ungeregelten Vorsteuerdruck als zweiten Wert (12) erzeugt.

17. Druckluftbremseinrichtung nach einem der Ansprüche 10 bis 16, **dadurch gekennzeichnet, dass** die geregelte elektro-pneumatische Bremseinrichtung (2) eine direkte elektro-pneumatische Bremseinrichtung ist, mit einem elektro-pneumatischen Druckregler, welcher mit Hilfe eines Bremsmagnetventils, eines Lösemagnetventils, eines Drucksensors sowie eines elektronischen Steuergeräts auf der Basis eines in einer Hauptluftbehälterleitung HB geführten Hauptluftbehälterleitungsdrucks einen geregelten Bremsdruck oder einen geregelten Vorsteuerdruck als ersten Wert (10) erzeugt.

18. Druckluftbremseinrichtung nach einem der Ansprüche 10 bis 17, **dadurch gekennzeichnet, dass** die Signalmittel zur Erzeugung des Signals zur Auslösung einer Zwangs-, Schnell- oder Notbremsung wenigstens eine elektrische Sicherheitsschleife beinhalten.

## Claims

1. A method for controlling a compressed-air braking device of a rail vehicle in the event of automatic, rapid or emergency braking, this compressed-air braking device having a regulated electro-pneumatic braking device (2) with brake-pressure regulation, an unregulated brake-pressure control device (4) for generating an unregulated brake pressure and at least one pneumatic brake actuator (16),
a) the regulated electro-pneumatic braking device (2) and the unregulated brake-pressure control device (4) being activated simultaneously,
in response to a signal to trigger automatic, rapid or emergency braking,
**characterised in that**
b) a first value (10) for the brake pressure generated by the regulated electro-pneumatic braking device (2) or a first value (10) for a pilot pressure representing this brake pressure and a second value (12) for the brake pressure generated by unregulated brake-pressure control device (4) or a second value for a pilot pressure representing this brake pressure are compared with one another, this comparison being made by applying the first value (10) and the second value (12) to mechanical components of an exclusively pneumatic-mechanical comparison device (14), and,
c) dependent on this comparison, a brake pressure is applied to the at least one pneumatic brake actuator (16) based exclusively on the first value (10) or based exclusively on the second value (12) or based on the first value (10) and the second value (12);
the unregulated brake-pressure control device (4) being designed to generate a brake pressure that is graduated dependent on speed.

2. A method according to claim 1, **characterised in that** saved in a memory of a control device of the regulated electro-pneumatic braking device (2) are characteristic curves in which the dependence of a set-point value for the brake pressure or the brake force dependent on the speed of the rail vehicle is stored.

3. A method according to either of the preceding claims, **characterised in that** as long as the first value (10) is no more than a predetermined fraction below the second value (12), the brake pressure or a pilot pressure representing it takes the form of the first value (10) or alternatively the second value (12).

4. A method according to claim 3, **characterised in that** the predetermined fraction is approximately 30%.

5. A method according to any one of the preceding claims, **characterised in that** at least one shuttle valve is used as the mechanical-pneumatic comparison device (14).

6. A method according to any one of the preceding claims, **characterised in that** the unregulated brake-pressure control device (4) is an indirect brake that generates an unregulated brake pressure or an unregulated pilot pressure as a second value (12) dependent on a main air line pressure in a main air line (HL).

7. A method according to any one of the preceding claims, **characterised in that** the regulated electro-pneumatic braking device (2) is a direct electro-pneumatic brake device with an electro-pneumatic pressure regulator that generates a regulated brake pressure or a regulated pilot pressure as a first value (10) using a braking solenoid valve, a releasing solenoid valve, a pressure sensor and an electronic control device on the basis of a main air vessel line pressure carried in a main air vessel line (HB).

8. A method according to any one of the preceding claims, **characterised in that** the signal to trigger automatic, rapid or emergency braking is modulated via an electrical safety loop.

9. A method according to any one of the preceding claims, **characterised in that** a pilot pressure is applied to a throughput booster (15) based exclusively on the first value (10) or based exclusively on the second value (12) or based on the first value (10) and the second value (12) and that from this pilot pressure the throughput booster (15) forms the brake pressure for the brake actuator that is arranged downstream of the throughput booster (15).

10. A compressed-air braking device of a rail vehicle containing a regulated electro-pneumatic braking device (2) with brake pressure regulation, an unregulated brake-pressure control device (4) for generating an unregulated brake pressure, a controller for controlling the braking devices (2; 4), at least one pneumatic brake actuator (16) and signal means that act together with the controller at least to generate a signal to trigger automatic, rapid or emergency braking, **characterised in that** the controller is designed such that, in response to a signal modulated by the signal means for triggering automatic, rapid or emergency braking,
a) the regulated electro-pneumatic braking device (2) and the unregulated brake-pressure control device (4) are activated simultaneously,
b) there being provided an exclusively pneumatic-mechanical comparison device (14) by means of which a first value (10) for the brake pressure generated by the regulated electro-pneumatic braking device (2) or a first value (10) for a pilot pressure representing this brake pressure and a second value (12) for the brake pressure generated by the unregulated brake-pressure control device (4) or a second value (12) for a pilot pressure representing this brake pressure are compared with one another, this comparison being made by applying the first value (10) and the second value (12) to mechanical components of an exclusively pneumatic-mechanical comparison device (14), and
c) the pneumatic-mechanical comparison device (14) further being designed such that dependent on this comparison it generates a brake pressure for the at least one pneumatic brake actuator (16) or a pilot pressure representing this brake pressure based exclusively on the first value (10) or based exclusively on the second value (12) or based on the first value (10) and the second value (12);
the unregulated brake-pressure control device (4) being designed to generate a brake pressure that is graduated dependent on speed.

11. A compressed-air brake device according to claim 10, **characterised in that** the mechanical-pneumatic comparison device (14) contains at least one shuttle valve.

12. A compressed-air brake device according to claim 10 or 11, **characterised in that** a throughput booster (15) is arranged between the mechanical-pneumatic comparison device (14) and the at least one brake actuator (16).

13. A compressed-air brake device according to any one of the claims 10 to 12, **characterised in that** saved in a memory of a control device of the regulated electro-pneumatic braking device (2) are characteristic curves in which the dependence of a set-point value for the brake pressure or for the brake force dependent on the speed of the rail vehicle is stored.

14. A compressed-air brake device according to any one of claims 10 to 13, **characterised in that** the mechanical-pneumatic comparison device (14) is designed such that as long as the first value (10) is no more than a predetermined fraction below the second value (12), the brake pressure or a pilot pressure representing it takes the form of the first value (10) or, alternatively, the second value (12).

15. A compressed-air brake device according to claim 14, **characterised in that** the predetermined fraction is approximately 30%.

16. A compressed-air brake device according to any one of claims 10 to 15, **characterised in that** the unregulated brake-pressure control device (4) is an indirect brake that generates an unregulated brake pressure or an unregulated pilot pressure as a second value (12) dependent on a main air line pressure in a main air line (HL).

17. A compressed-air brake device according to any one of claims 10 to 16, **characterised in that** the regulated electro-pneumatic braking device (2) is a direct electro-pneumatic brake device comprising an electro-pneumatic pressure regulator that generates a regulated brake pressure or a regulated pilot pressure as a first value (10) using a braking solenoid valve, a release solenoid valve, a pressure sensor and an electronic control device on the basis of a main air vessel line pressure conveyed in a main air vessel line (HB).

18. A compressed-air brake device according to any one of claims 10 to 17, **characterised in that** the signal means for generating the signal to trigger automatic, rapid or emergency braking contains at least one electrical safety loop.

## Revendications

1. Procédé de commande d'un dispositif de freinage à air comprimé d'un véhicule ferroviaire ayant un dispositif (2) de freinage électropneumatique régulé à régulation de la pression de freinage et un dispositif (4) de commande de la pression de freinage non régulé pour produire une pression de freinage non régulée, ainsi qu'au moins un actionneur (16) de frein pneumatique dans le cas d'un freinage d'arrêt automatique, d'un freinage rapide ou d'un freinage d'urgence,
sur un signal de déclenchement d'un freinage d'arrêt automatique, d'un freinage rapide ou d'un freinage d'urgence,
a) le dispositif (2) de freinage électropneumatique régulé et le dispositif (4) de commande de la pression de freinage non régulée étant activés en même temps, **caractérisé en ce que**
b) on compare entre elles une première valeur (10) de la pression de freinage produite par le dispositif (2) de freinage électropneumatique régulé ou une première valeur (10) d'une pression pilote représentant cette pression de freinage et une deuxième valeur (12) de la pression de freinage produite par le dispositif (4) de commande de la pression de freinage non régulée ou une deuxième valeur (12) pour une pression pilote représentant cette pression de freinage, cette comparaison s'effectuant par action de la première valeur (10) et de la deuxième valeur (12) sur des éléments mécaniques d'un dispositif (14) de comparaison exclusivement pneumatomécanique et
c) en fonction de cette comparaison, on entre en commande, dans le au moins un actionneur (16) de frein pneumatique, une pression de freinage sur la base exclusivement de la première valeur (10) ou exclusivement sur la base de la deuxième valeur (12) ou sur la base de la première valeur (10) et de la deuxième valeur (12), le dispositif (4) de commande de la pression de freinage non régulée étant constitué pour produire une pression de freinage, qui est échelonnée en fonction de la vitesse.

2. Procédé suivant la revendication 1, **caractérisé en ce qu'**on mémorise, dans une mémoire d'un appareil de commande du dispositif (2) de freinage électropneumatique régulé, des courbes caractéristiques, dans lesquelles la dépendance d'une valeur de consigne de la pression de freinage ou de la force de freinage en fonction de la vitesse du véhicule ferroviaire est mémorisée.

3. Procédé suivant l'une des revendications précédentes, **caractérisé en ce que**, tant que la première valeur (10) n'est pas de plus d'une fraction donnée à l'avance en dessous de la deuxième valeur (12), on forme la pression de freinage ou une pression pilote la représentant par la première valeur (10), sinon par la deuxième valeur (12).

4. Procédé suivant la revendication 3, **caractérisé en ce que** la fraction donnée à l'avance est d'environ 30%.

5. Procédé suivant l'une des revendications précédentes, **caractérisé en ce qu'**on tire parti comme dispositif (14) de comparaison mécanopneumatique d'au moins une soupape à deux voies.

6. Procédé suivant l'une des revendications précédentes, **caractérisé en ce que** le dispositif (4) de commande de pression de freinage non régulée est un frein indirect, qui produit, en fonction d'une pression de conduit d'air principal dans un conduit (HL) d'air principal, une pression de freinage non régulée ou une pression pilote non régulée comme deuxième valeur (12).

7. Procédé suivant l'une des revendications précédentes, **caractérisé en ce que** le dispositif (2) de freinage électropneumatique régulé est un dispositif de freinage électropneumatique direct ayant un régleur de pression électropneumatique, qui, à l'aide d'une électrovanne de frein, d'une électrovanne de desserrage, d'un capteur de pression, ainsi que d'un appareil électronique de commande, produit, sur la base d'une pression de conduit de réservoir d'air principal allant à un conduit HB de réservoir d'air principal, une pression de freinage régulée ou une pression pilote régulée comme première valeur (10).

8. Procédé suivant l'une des revendications précédentes, **caractérisé en ce qu'**on commande le signal de desserrage d'un freinage d'arrêt automatique, d'un freinage rapide ou d'un freinage d'urgence par une boucle électrique de sécurité.

9. Procédé suivant l'une des revendications précédentes, **caractérisé en ce que**, sur la base exclusivement de la première valeur (10) ou exclusivement sur la base de la deuxième valeur (12) ou sur la base de la première valeur (10) et de la deuxième valeur (12), on entre en commande une pression pilote dans un premier amplificateur (15) de débit, à partir de laquelle l'amplificateur (15) de débit forme la pression de freinage pour l'actionneur (16) de frein monté en aval de l'amplificateur (15) de débit.

10. Dispositif de freinage à air comprimé d'un véhicule ferroviaire comportant un dispositif (2) de freinage électropneumatique régulé à régulation de la pression de freinage, un dispositif (4) de commande de la pression de freinage non régulée pour produire une pression de freinage non régulée, une commande pour commander les dispositifs (2; 4) de freinage, au moins un actionneur (16) de frein pneumatique, ainsi qu'un moyen de signalisation coopérant avec la commande et produisant un signal de déclenchement d'un freinage d'arrêt automatique, d'un freinage rapide ou d'un freinage d'urgence, **caractérisé en ce que** la commande est constituée de manière, sur un signal commandé par les moyens de signal de desserrage d'un freinage d'arrêt automatique, d'un freinage rapide ou d'un freinage d'urgence,
a) à activer en même temps le dispositif (2) de freinage électropneumatique régulé et le dispositif (4) de commande de la pression de freinage non régulée, dans lequel
b) il est prévu un dispositif (14) de comparaison exclusivement pneumatomécanique, par lequel une première valeur (10) de la pression de freinage produite par le dispositif (2) de freinage électropneumatique régulé ou une première valeur (10) d'une pression pilote représentant cette pression de freinage et une deuxième valeur (12) de la pression de freinage produite par le dispositif (4) de commande de la pression de freinage non régulée ou une deuxième valeur (12) d'une pression pilote représentant cette pression de freinage sont comparées entre elles, cette comparaison s'effectuant par action de la première valeur (10) et de la deuxième valeur (12) sur des éléments mécaniques du dispositif (14) de comparaison exclusivement pneumatomécanique et dans lequel
c) le dispositif (14) de comparaison pneumatomécanique est constitué, en outre, de manière à produire, en fonction de cette comparaison, une pression de freinage pour le au moins un actionneur (16) de frein pneumatique ou une pression pilote représentant cette pression de freinage sur la base exclusivement de la première valeur (10) ou exclusivement sur la base de la deuxième valeur (12) ou sur la base de la première valeur (10) et de la deuxième valeur (12), dans lequel le dispositif (4) de commande de la pression de freinage non régulée est constitué pour produire une pression de freinage, qui est échelonnée en fonction de la vitesse.

11. Dispositif de freinage à air comprimé suivant la revendication 10, **caractérisé en ce que** le dispositif (14) de comparaison mécanopneumatique comporte au moins une soupape à deux voies.

12. Dispositif de freinage à air comprimé suivant la revendication 10 ou 11, **caractérisé en ce qu'**un amplificateur (15) de débit est monté entre le dispositif (14) mécanopneumatique et le au moins un actionneur (16) de frein.

13. Dispositif de freinage à air comprimé suivant l'une des revendications 10 à 12, **caractérisé en ce qu'**il est mémorisé, dans une mémoire d'un appareil de commande du dispositif (2) de freinage électropneumatique régulé, des courbes caractéristiques, dans lesquelles la dépendance d'une valeur de consigne de la pression de freinage ou de la force de freinage en fonction de la vitesse du véhicule ferroviaire est mémorisée.

14. Dispositif de freinage à air comprimé suivant l'une des revendications 10 à 13, **caractérisé en ce que** le dispositif (14) de comparaison mécanopneumatique est constitué de manière à ce que, tant que la première valeur (10) n'est pas de plus d'une fraction donnée à l'avance en dessous de la deuxième valeur (12), on forme la pression de freinage ou une pression pilote la représentant par la première valeur (10), sinon par la deuxième valeur (12).

15. Dispositif de freinage à air comprimé suivant la revendication 14, **caractérisé en ce que** la fraction donnée à l'avance est d'environ 30%.

16. Dispositif de freinage à air comprimé suivant l'une des revendications 10 à 15, **caractérisé en ce que** le dispositif (4) de commande de pression de freinage non régulée est un frein indirect, qui produit, en fonction d'une pression de conduit d'air principal dans un conduit (HL) d'air principal, une pression de freinage non régulée ou une pression pilote non régulée comme deuxième valeur (12).

17. Dispositif de freinage à air comprimé suivant l'une des revendications 10 à 16, **caractérisé en ce que** le dispositif (2) de freinage électropneumatique régulé est un dispositif de freinage électropneumatique direct ayant un régleur de pression électropneumatique, qui, à l'aide d'une électrovanne de frein, d'une électrovanne de desserrage, d'un capteur de pression, ainsi que d'un appareil électronique de commande, produit, sur la base d'une pression de conduit de réservoir d'air principal allant à un conduit HB de réservoir d'air principal, une pression de freinage régulée ou une pression pilote régulée comme première valeur (10).

18. Dispositif de freinage à air comprimé suivant l'une des revendications 10 à 17, **caractérisé en ce que** les moyens de signalisation pour la production du signal de déclenchement d'un freinage d'arrêt automatique, d'un freinage rapide ou d'un freinage d'urgence comportent au moins une boucle de sécurité électrique.
